# EUROPEAN PATENT APPLICATION

(11) **EP 4 567 619 A1**
(43) Date of publication of application: **11.06.2025**
(21) Application number: 24216058.8
(22) Date of filing: 28.11.2024
(51) Int. Cl.: G06F 15/78

(54) **ELECTRONIC DEVICE FOR ACCELERATING EXECUTION OF A MODEL AND METHOD OF OPERATING THE SAME**

(30) Priority: 06.12.2023 KR 20230175943
(71) Applicant: Samsung Electronics Co., Ltd., Suwon-si, Gyeonggi-do 16677 (KR)
(72) Inventor: Kim, Hyunsoo, 16678 Suwon-si, Gyeonggi-do (KR)
(74) Representative: Grünecker Patent- und Rechtsanwälte PartG mbB

(57) **Abstract**

An electronic device includes a processing-in-memory (PIM) controller and PIM configured to perform a PIM operation in response to a PIM request generated by the PIM controller. The PIM controller is configured to perform a non-linear function (NLF) operation among a plurality of requested operations, generate a PIM request for the PIM operation, and transmit the PIM request to the PIM.

## Description

### 1. Technical Field

Embodiments of the disclosure are directed to an electronic device for accelerating generation of a model and a method of operating the electronic device.

### 2. Discussion of Related Art

An artificial intelligence (AI) model is a computer program that detects specific patterns using a collection of data sets. Executing an AI model can be time consuming. A processing-in-memory (PIM) may be used to accelerate execution of the AI model. The PIM is a computer architecture in which data operations are available directly on the data memory, rather than having to be performed on an external host processor. The (PIM) is a semiconductor memory device that combines a function of a memory with a function of a processor for performing arithmetic operations. However, some operations, due to their operational characteristics, may still need to be performed by the host processor as it is difficult to perform them in PIM. Further, achieving optimal performance is challenging because of the increased communication overhead between the memory and the host processor.

### SUMMARY

The invention is what is claimed in the independent claims. Preferred embodiments are specified in the dependent claims.

According to an embodiment, there is provided an electronic device including a processing-in-memory (PIM) controller and PIM. The PIM is configured to perform a PIM operation in response to a PIM request generated by the PIM controller. The PIM controller is configured to perform a non-linear function (NLF) operation among a plurality of requested operations, generate a PIM request for the PIM operation, and transmit the PIM request to the PIM.

The PIM controller may include a first logic circuit configured to perform the NLF operation among the plurality of requested operations.

The PIM controller may further include a command queue configured to store commands for the plurality of operations received from a host processor in the electronic device, a second logic circuit configured to generate the PIM request for the PIM operation among the plurality of requested operations, and a control register configured to control an operation of the first logic circuit.

The PIM controller may be configured to classify each of the plurality of requested operations as one of the PIM operation and the NLF operation according to type information of each of the plurality of requested operations.

The electronic device may further include a host processor configured to transmit a request for the plurality of requested operations to the PIM controller.

The plurality of requested operations may be performed by the PIM controller and the PIM and not the host processor.

The electronic device may further include a memory controller configured to, in response to the PIM request received from the PIM controller, generate a PIM command and transmit the PIM command to the PIM.

The PIM controller may be disposed in a memory controller included in the electronic device and configured to manage data input into the PIM or data output from the PIM or a direct memory access (DMA) included in the electronic device and configured to access data stored in the PIM.

The PIM controller may be configured to, in response to all of the plurality of requested operations being performed, transmit a result of the plurality of requested operations to a host processor.

The PIM may include a data storage space and an operator configured to perform the PIM operation in response to the PIM request.

The data storage space may be configured to store a result of the PIM operation and a result of the NLF operation.

According to an embodiment, there is provided a method of operating an electronic device, the method including: classifying, by a processing-in-memory (PIM) controller in the electronic device, a target operation to be processed as one of a PIM operation and a non-linear function (NLF) operation based on a requested order of a plurality of operations; performing, by the PIM controller, in response to classifying the target operation being the NLF operation, the target operation corresponding to the NLF operation; generating, by the PIM controller, in response to classifying the target as the PIM operation, a PIM request for the target operation and transmitting the PIM request to PIM in the electronic device; and performing, by the PIM, the target operation corresponding to the PIM operation according to the PIM request received from the PIM controller.

The performing of the target operation corresponding to the NLF operation may be performed by a first logic circuit comprised in the PIM controller and configured to perform an NLF operation among the plurality of operations.

The method may further include storing commands for the plurality of operations received from a host processor in the electronic device to a command queue comprised in the PIM controller.

The classifying of the target operation may include classifying the target operation as one of the PIM operation and the NLF operation according to type information of the target operation.

The method may further include transmitting, by a host processor in the electronic device, a request for the plurality of operations to the PIM controller.

The plurality of operations may be performed by the PIM controller and the PIM and not the host processor.

The method may further include generating, by a memory controller in the electronic device, a PIM command in response to the PIM request received from the PIM controller and transmitting the PIM command to the PIM.

The method may further include transmitting, by the PIM controller, in response to all of the plurality of operations being performed, a result of the plurality of operations to a host processor in the electronic device.

According to an embodiment, there is provided an electronic device including a processing-in-memory (PIM) and a direct memory access (DMA). The PIM performs a PIM operation in response to a PIM request. The PIM controller is configured to perform a non-linear function (NLF) operation among a plurality of operations requested by a host processor, generate a PIM request for a PIM operation among the plurality of operations, and transmit the PIM request to the PIM.

The electronic device may further include a memory controller, where the PIM controller transmits the PIM request to the memory controller, and the memory controller forwards the PIM request to the PIM.

The electronic device may further include an interconnect connected to the host processor, the DMA, and the memory controller, where the DMA receives commands for the plurality of operations from the host processor through the interconnect and the memory controller receives the PIM request through the interconnect.

### BRIEF DESCRIPTION OF THE DRAWINGS

These and/or other aspects and features of the disclosure will become apparent and more readily appreciated from the following description of embodiments, taken in conjunction with the accompanying drawings of which:
FIG. 1 is a diagram illustrating an electronic device according to an embodiment;
FIG. 2 is a diagram illustrating an operation of performing a plurality of operations, including a processing-in-memory (PIM) operation and a non-linear function (NLF) operation, according to an embodiment;
FIG. 3 is a diagram illustrating an example of sequentially performing a PIM operation and an NLF operation, according to an embodiment;
FIG. 4 is a diagram illustrating an operation of executing a large language model (LLM)-based transformer decoder, according to an embodiment;
FIG. 5 is a diagram illustrating an example of an LLM acceleration system using a compute express link (CXL)-PIM card, according to an embodiment;
FIG. 6 is a diagram illustrating an electronic device according to an embodiment;
FIG. 7 is a diagram illustrating an electronic device according to an embodiment; and
FIG. 8 is a diagram illustrating a method of operating an electronic device, according to an embodiment.

### DETAILED DESCRIPTION

Embodiments will now be described more fully hereinafter with reference to the accompanying drawings. Embodiments may, however, be provided in different forms and should not be construed as limiting. The same reference numbers may indicate the same components throughout the disclosure.

As used herein, "A or B", "at least one of A and B", "at least one of A or B", "A, B or C", "at least one of A, B and C", "at least one of A, B, or C", and "one or a combination of at least two of A, B, and C," each of which may include any one of the items listed together in the corresponding one of the phrases, or all possible combinations thereof.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise.

Hereinafter, the embodiments are described in detail with reference to the accompanying drawings. When describing the embodiments with reference to the accompanying drawings, like reference numerals refer to like elements and a repeated description related thereto is omitted.

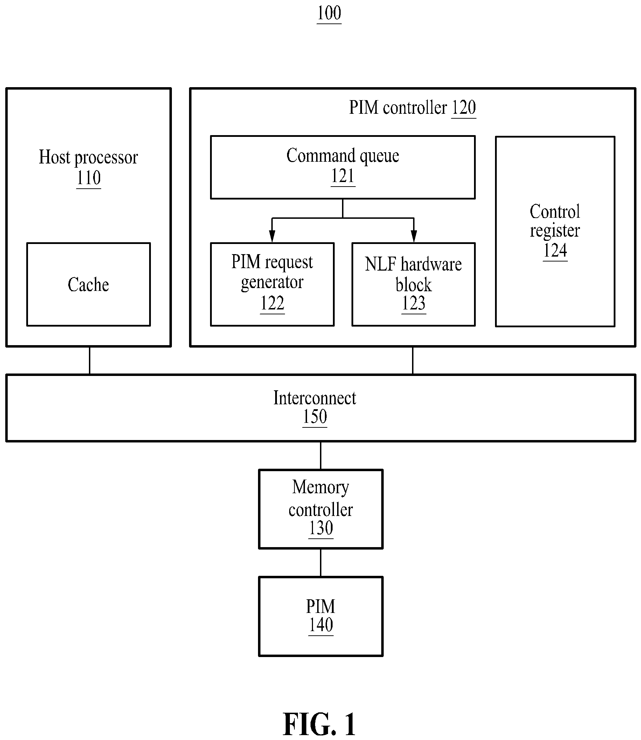

FIG. 1 is a diagram illustrating an electronic device according to an embodiment.

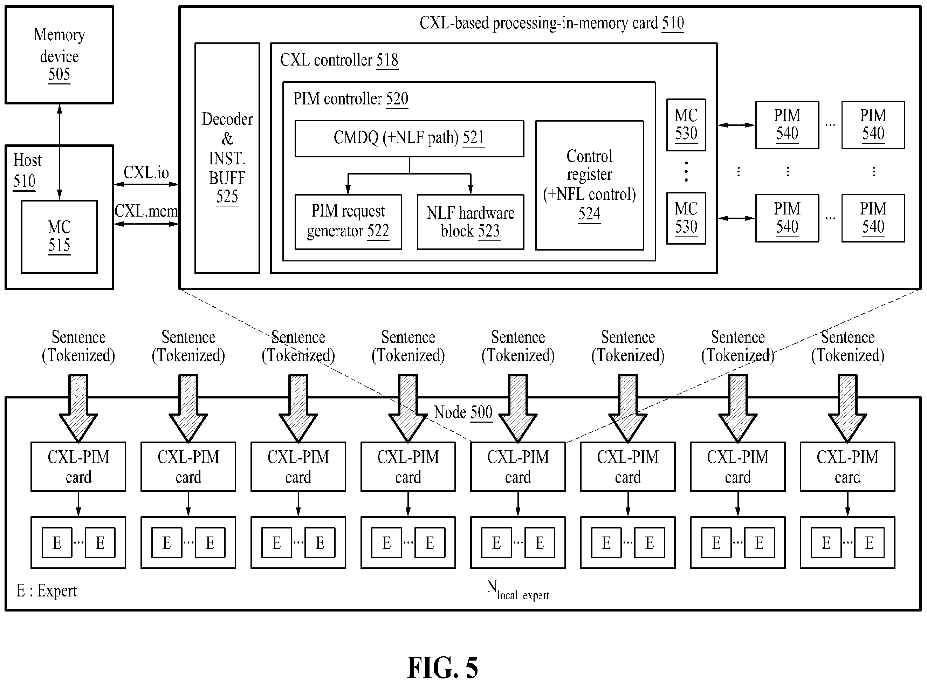

Referring to FIG. 1, an electronic device 100 may include a host processor 110, a processing-in-memory (PIM) controller 120 (e.g., a first controller circuit), a memory controller 130 (e.g., a second controller circuit), and PIM 140. The host processor 110, the PIM controller 120, the memory controller 130, and the PIM 140 may communicate with one another via an interconnect 150 (e.g., an interconnect circuit). For example, the interconnect 150 may include a bus, a compute express link (CXL), and peripheral component interconnect express (PCIe). However, embodiments are not limited thereto. When the interconnect 150 is an internal bus, the memory controller 130 may be packaged together with the host processor 110, allowing the memory controller 130 to be located in the host processor 110. Alternatively, when the interconnect 150 is a CXL, the PIM controller 120 may be located in a CXL controller, as described below with reference to FIG. 5. Hereinafter, for ease of description, an embodiment in which the host processor 110, the PIM controller 120, and the memory controller 130 are individual components is described, as illustrated in FIG. 1.

The electronic device 100 may include various computing devices, such as a mobile phone, a smartphone, a tablet personal computer (PC), an e-book device, a laptop, a PC, a desktop, a workstation, or a server, various wearable devices, such as a smart watch, smart eyeglasses, a head-mounted display (HMD), or smart clothing, various home appliances such as a smart speaker, a smart television (TV), or a smart refrigerator, and other devices, such as a smart vehicle, a smart kiosk, an Internet of things (IoT) device, a walking assist device (WAD), a drone, or a robot.

The host processor 110 may be a device configured to control the overall operation of the electronic device 100 and may include other processors, for example, a central processing unit (CPU), a graphics processing unit (GPU), a neural processing unit (NPU), a tensor processing unit (TPU), or a digital signal processor (DSP). The host processor 110 may generate a request for various components (e.g., the PIM controller 120, etc.) in the electronic device 100 through a host program.

A request for the PIM controller 120 generated by the host processor 110 may be related to a plurality of operations of a model to be executed. The model may be a neural network to be executed by the electronic device 100 and may include, for example, a large language model (LLM), a voice recognition model, a translation model or an advanced virtual assistant model. However, embodiments are not limited thereto.

The plurality of operations may include a PIM operation and a non-linear function (NLF) operation requested when the electronic device 100 executes the model. The PIM operation may include at least one of an arithmetic operation, such as addition, multiplication, accumulation, and general matrix vector multiplication (GEMV), and a logic operation, such as AND, OR, and XOR operations, and may be performed by the PIM 140. Since the PIM operation is directly performed by the PIM 140 in which operand data is stored, there is no need to read the operand data into the host processor 110 and/or use a separate accelerator for the PIM operation. Accordingly, power consumption may be minimized by reducing data movement distance and minimizing the loss of a memory bandwidth. The NLF operation may be an operation in which relationships between variables are not linear and may include, for example, tanh, sigmoid, softmax, dropout, and Gaussian error linear unit (GELU). The NLF operation may be performed by the PIM controller 120. However, the PIM 140 may have difficulty performing the NLF operation due to operational characteristics of the NLF operation.

The PIM controller 120 may be a device for managing a PIM operation performed by the PIM 140. The PIM controller 120 may include a command queue 121, a PIM request generator 122 (e.g., a logic circuit), an NLF hardware block 123 (e.g., a logic circuit, a processor, etc.), and a control register 124.

The command queue 121 may store commands for a plurality of operations received from the host processor 110 according to a first-in, first out (FIFO) structure. The commands stored in the command queue 121 may be processed sequentially according to the FIFO structure. A command stored in the command queue 121 may have a command structure or format of [op_type, precision, in_addr_0, in_addr_1, out addr, in_0_size, in_1_size, out_size].

In the above command structure, the field "op_type" may denote an operation type. For example, the field "op_type" may denote the type of PIM operation, such as addition, multiplication, GEMV, AND, and OR, or the type of NLF operation, such as tanh, sigmoid, and GELU. The field "precision" may denote a number format and include, for example, integer-4-bit (INT4), integer-8-bit (INT8), integer-16-bit (INT16), floating point-8bit (FP8), floating point-16bit (FP16), floating point-32bit (FP32), binary floating point-8bit (BF8), binary floating point-16bit (BF16), and the like. However, embodiments are not limited thereto. The field "in_addr_0" may denote an address in which operand data 0 is stored, the field "in_addr_1" may denote an address in which operand data 1 is stored, and the field "out_addr" may denote an address in which output data is stored. The field "in_0_size" may denote the size of data stored in in_addr_0, the field "in_1_size" may denote the size of data stored in in_addr_1, and the field "out_size" may denote the size of data stored in out_addr.

When an operation type corresponding to a target command to be processed in the requested order among commands stored in the command queue 121 corresponds to a PIM operation, the PIM request generator 122 may generate a PIM request for performing the PIM operation based on the target command. The PIM request generator 122 may transmit the generated PIM request to the memory controller 130. The memory controller 130 may forward the generated PIM request to the PIM 140.

When an operation type corresponding to a target command to be processed in the requested order among commands stored in the command queue 121 corresponds to an NLF operation, the NLF hardware block 123 may perform the NLF operation based on the target command. The NLF hardware block 123 may be a hardware device that performs a non-linear operation and may be implemented using, for example, look-up table (LUT), piecewise linear, and direct computation techniques. However, embodiments are not limited thereto, and other implementation examples may be used without limitation.

For example, the LUT technique may be a technique of storing x and y values of an NLF operation in an internal buffer in a tabular format in advance and retrieving an output value corresponding to an input value from a table. The NLF hardware block 123 using the LUT technique may perform at least one NLF operation by storing at least one table. When the LUT technique is used, as table data becomes more precise, the amount of storage space needed increases. The piecewise linear technique may compensate for this drawback of the LUT technique and may perform an operation by linearly interpolating a y value according to an x value based on a reference LUT value. The piecewise linear technique may perform an operation by approximating an NLF with a plurality of linear functions. The direct computation technique may involve equipping a general-purpose operator or a dedicated NLF operation processor within the NLF hardware block 123 to perform an NLF operation. For example, the NLF hardware block 123 using the direct computation technique may include an arithmetic logic unit (ALU), a register, static random access memory (SRAM), and local memory. An operating system (OS) or dedicated firmware may be present to operate the NLF hardware block 123.

The control register 124 may provide an external interface for controlling the PIM controller 120. The control register 124 may control the functions of the command queue 121, the PIM request generator 122, and the NLF hardware block 123 and may verify the operations of the command queue 121, the PIM request generator 122, and the NLF hardware block 123.

The memory controller 130 may manage data input to the PIM 140 or data output from the PIM 140. The memory controller 130 may generate a memory command based on a memory request. The memory controller 130 may receive the memory request from the host processor 110 across the interconnected 150. For example, the memory controller 130 may convert a memory request into a memory command including an active command, a pre-charge command, a refresh command, a read command, and a write command. Additionally, the memory controller 130 may generate a PIM command based on a PIM request. The memory controller 130 may transmit the generated memory command and/or the generated PIM command to the PIM 140.

The PIM 140 may be a device for performing a PIM operation through an internal processor other than storing data and may include, for example, dynamic RAM (DRAM), high bandwidth memory (HBM), graphics double data rate (GDDR), or low-power double data rate (LPDDR). However, embodiments are not limited thereto. The PIM 140 may be a hardware device for performing a PIM operation other than a general memory operation and may perform other operations by being programmed, for example. The PIM 140 may include a data storage space for storing data and an internal processor for performing a PIM operation including the logic operation and/or arithmetic operation described above. The PIM operation may use the data storage space and the internal processor. The general memory operation may use the data storage space without using the internal processor.

For example, the PIM 140 may perform a PIM operation on an operand stored in the data storage space according to a PIM command transmitted from the memory controller 130 and store the result of the operation in the data storage space. Furthermore, the PIM 140 may transmit an operand for an NLF operation to be performed by the NLF hardware block 123 to the NLF hardware block 123 according to a memory command transmitted from the memory controller 130 and may store the result of the NLF operation in the data storage space.

All of the plurality of operations including the PIM operation and the NLF operation requested when executing a model in the electronic device 100 may be performed by the PIM controller 120 and the PIM 140 without the assistance of the host processor 110. This may effectively reduce communication overhead between the host processor 110 and the PIM 140, thereby accelerating execution of the model. The cost of the electronic device 100 for executing the model may be effectively reduced by reducing the role of the relatively high-cost host processor, that is, the host processor 110, and increasing the role of the relatively low-cost PIM controller 120 and PIM 140 during the execution of the model. Through this, it may be possible to effectively accelerate execution of the model without the need to load the data stored in the PIM 140 to the host processor 110 for an NLF operation. By including the NLF hardware block 123 that performs an NLF operation in the PIM controller 120 instead of the PIM 140, it may be possible to prevent an increase in the area of the PIM 140.

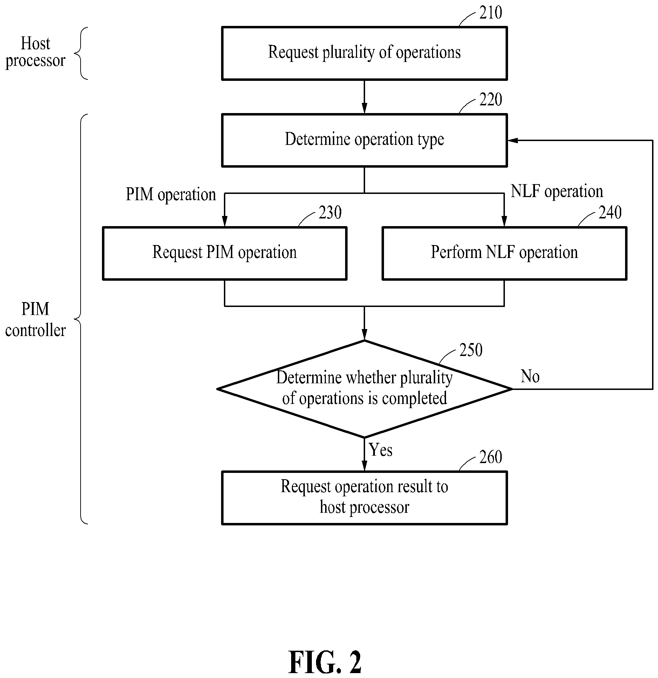

FIG. 2 is a diagram illustrating performing a plurality of operations, including a PIM operation and an NLF operation, according to an embodiment.

In operation 210, a host processor may send a request to a PIM controller (e.g., 120) to execute a plurality of operations, including a PIM operation and an NLF operation. Commands corresponding to the request from the host processor may be stored in a command queue (e.g., 121) in the PIM controller.

In operation 220, the PIM controller may determine the type of a target operation to be processed based on the order in which the commands are stored in the command queue. For example, the PIM controller may determine the type of target operation based on an operation type of a target command to be processed in the command queue. When the type of target operation is a PIM operation, operation 230 may be performed subsequently. When the type of target operation is an NLF operation, operation 240 may be performed subsequently.

In operation 230, the PIM controller may generate a PIM request for performing the PIM operation through a PIM request generator (e.g., 122) and transmit the generated PIM request to PIM (e.g., 140). The PIM may perform the PIM operation based on the received PIM request.

In operation 240, the PIM controller may perform the NLF operation through an NLF hardware block (e.g., 123).

In operation 250, the PIM controller may determine whether all of the plurality of operations requested by the host processor have been performed based on whether there is any command remaining in the command queue. When it is determined that not all of the plurality of operations are performed because there is a command remaining in the command queue, operation 220 may be performed subsequently. Otherwise, when it is determined that all of the plurality of operations have been performed because there is no command remaining in the command queue, operation 260 may be performed subsequently.

In operation 260, the PIM controller may transmit operation results of the plurality of operations to the host processor.

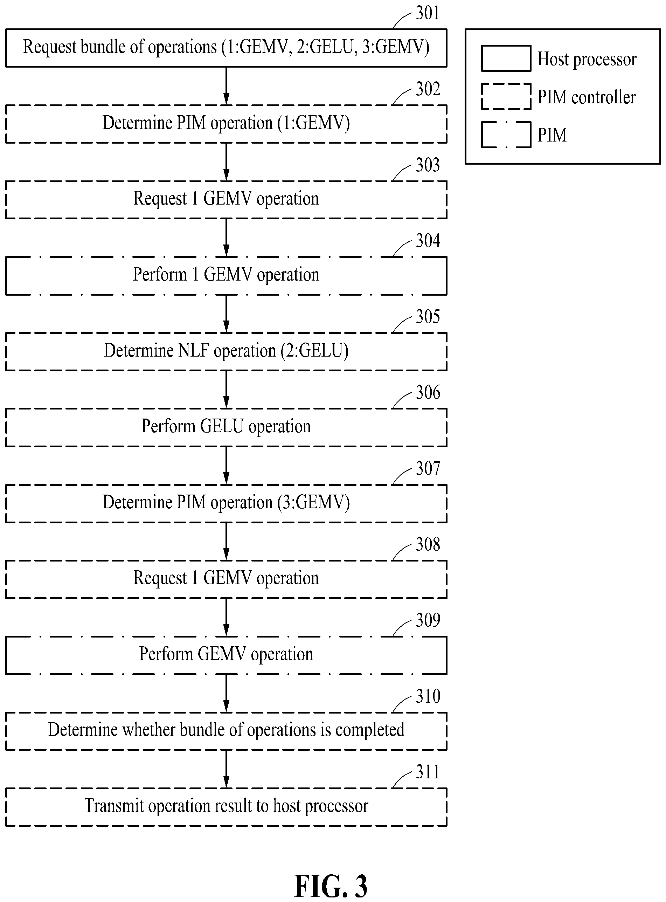

FIG. 3 is a diagram illustrating an example of sequentially performing a PIM operation and an NLF operation, according to an embodiment.

Referring to FIG. 3, for ease of description, an example in which a plurality of operations is requested in the order of a GEMV operation, a GELU operation, and a GEMV operation is described. However, embodiments are not limited thereto.

In operation 301, a host processor may transmit a request for a bundle of operations to a PIM controller. Herein, for ease of description, a plurality of operations may be referred to as a bundle of operations.

In operation 302, the PIM controller may determine that a first requested GEMV operation corresponds to a PIM operation. In operation 303, the PIM controller may generate a GEMV operation request and transmit the GEMV operation request to the PIM. In operation 304, the PIM may perform the GEMV operation based on the GEMV operation request. The operand may be stored in the PIM, and the result of the GEMV operation may also be stored in the PIM.

In operation 305, the PIM controller may determine that a second requested GELU operation corresponds to an NLF operation. In operation 306, the PIM controller may directly perform the NLF operation through an NLF hardware block. The operand for the NLF operation may be loaded into the NLF hardware block by the PIM. The result of the NLF operation may be transmitted to the PIM from the NLF hardware block and stored in the PIM.

In operation 307, the PIM controller may determine that a third requested GEMV operation corresponds to a PIM operation. In operation 308, the PIM controller may generate a GEMV operation request and transmit the GEMV operation request to the PIM. In operation 309, the PIM may perform the GEMV operation based on the GEMV operation request. The operand may be stored in the PIM, and the result of the GEMV operation may also be stored in the PIM.

In operation 310, when there is no command remaining in a command queue, the PIM controller may determine that the bundle of operations is completed. In operation 311, the PIM controller may transmit an operation result of the bundle of operations to the host processor.

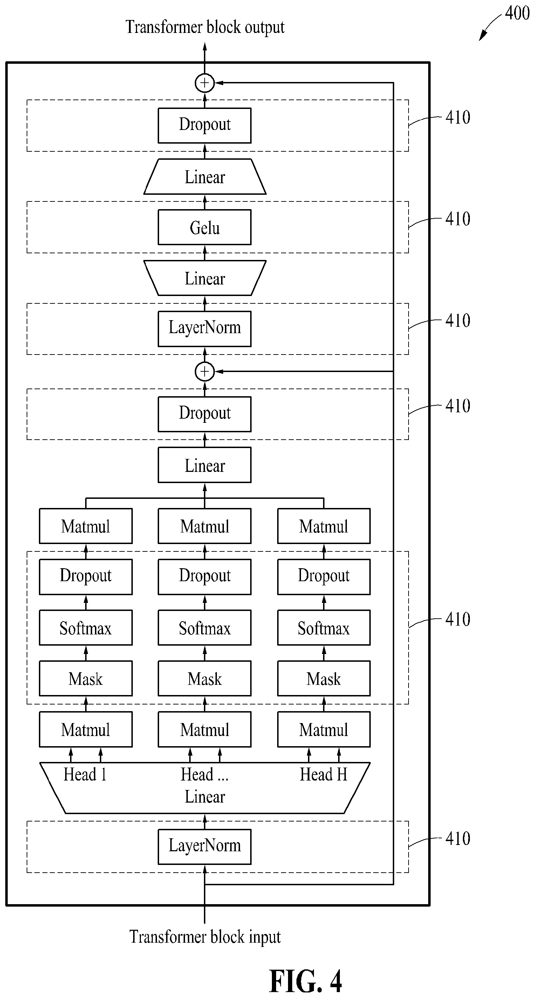

FIG. 4 is a diagram illustrating an operation of executing an LLM-based transformer decoder, according to an embodiment.

FIG. 4 illustrates an example of an LLM-based transformer decoder 400. In the example of FIG. 4, the PIM may have difficulty performing some parts 410 that correspond to an NLF operation. The other parts may be performed by the PIM. When an NLF hardware block is not included in the PIM controller, as described above, it may be required to load an operand stored in the PIM to a host processor and transfer an operation result from the host processor to the PIM to process some parts 410. This process may increase communication overhead between the host processor and the PIM, thereby increasing the overall system overhead. As illustrated in FIG. 4, the alternating arrangement of some parts 410 and other parts may lead to a significant increase in system overhead. However, NLF operations of some parts 410 may be processed by the NLF hardware block included in the PIM controller, thereby effectively accelerating the LLM-based transformer decoder 400 without the assistance of the host processor. For example, the some parts 410 may include a dropout function, which is a regularization technique for neural network models; a Gelu function, which is an activation function of a neural network; a Layer normalization (LayerNorm) function, which is a technique to normalize distributions of intermediate layers of a neural network; a softmax function, which converts a vector of real numbers into a probability distribution; or a mask operation. The mask operation may be a form of a dropout function where the contribution of a node is made zero.

FIG. 5 is a diagram illustrating an example of an LLM acceleration system using a CXL-PIM card, according to an embodiment.

FIG. 5 illustrates an example of an LLM acceleration system 500. A CXL-PIM card 510 in the LLM acceleration system 500 may include the PIM controller (e.g., a PIM controller 520) described above. When an operation corresponding to Expert in an LLM is performed by a CXL-PIM card rather than an accelerator (e.g., a GPU, etc.), cost savings, reduced power consumption, and increased performance attributed to reduced overhead may be expected, compared to when the operation is performed by the accelerator. Expert refers to a feed forward network (FFN) layer including the Linear + Gelu + Linear illustrated in FIG. 4 and may be accelerated by the PIM controller and the PIM without the assistance of the accelerator.

As illustrated in FIG. 5, by establishing an LLM acceleration system utilizing the CXL-PIM card, the effects of low cost, low power consumption, and high performance may be realized compared to an acceleration system utilizing an accelerator. In addition, these effects may be realized when an on-device LLM model utilizing service (e.g., an advanced virtual assistant model that helps with various personal tasks such as scheduling, shopping, news, health, finance, travel, etc.), a voice recognition service or a translation service are performed on a mobile device.

The LLM acceleration system 500 may include a plurality of CXL-PIM cards, where each CXL-PIM card 510 may interface with a host processor 510. The host processor 510 may include memory cells 515 and/or interface with a memory device 505. The CXL-PIM card 510 may include a decoder & instruction buffer 525, a CXL controller 518, and PIMs 540. The PIMs 540 may be similar to the PIM 140. The PIM controller 520 may include a command queue CMDQ 521 that includes an NLF path, a PIM request generator 522 similar to the PIM request generator 122, a NLF hardware block 523 similar to the NLF hardware block 123, a control register 524 for controlling an NLF operation, and memory cells 530. The host processor 510 may communicate with the LLM acceleration system 500 using CXL protocols such as CSL.io and CXL.mem. The PIM controller 520 may be similar to the PIM controller 120.

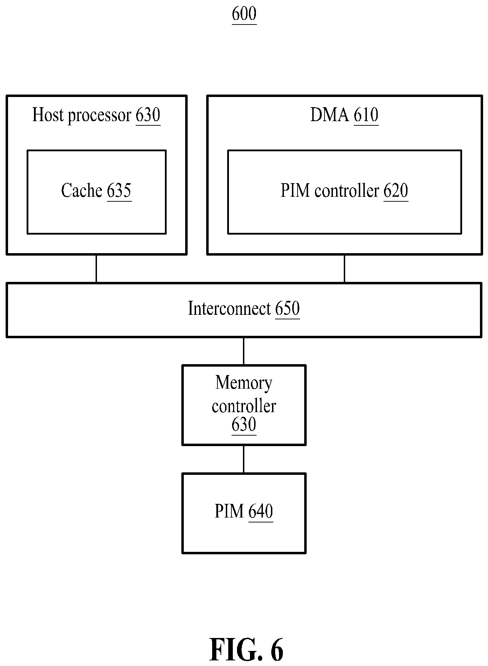

FIG. 6 is a diagram illustrating an electronic device according to an embodiment.

FIG. 6 illustrates an embodiment of a system 600 in which the PIM controller (e.g., a PIM controller 620) described above is disposed in a direct memory access (DMA) 610. The PIM controller 620 may be similar to the PIM controllers 120 or 520.

The DMA 610 may be a function or a module of a computer system that allows a predetermined hardware subsystem to access a PIM 640 independently of a host processor 630. The PIM 640 may be similar to the PIM 140. The DMA 610 may generate a memory request based on a command from the host processor 630. The host processor 630 may include a cache 635. The system 600 may further include an interconnect 650 similar to the interconnect 150 and a memory controller 630 similar to the memory controller 130.

The PIM controller 620 may be disposed in the DMA 610 and perform the operations described above. Accordingly, a more detailed description thereof is omitted.

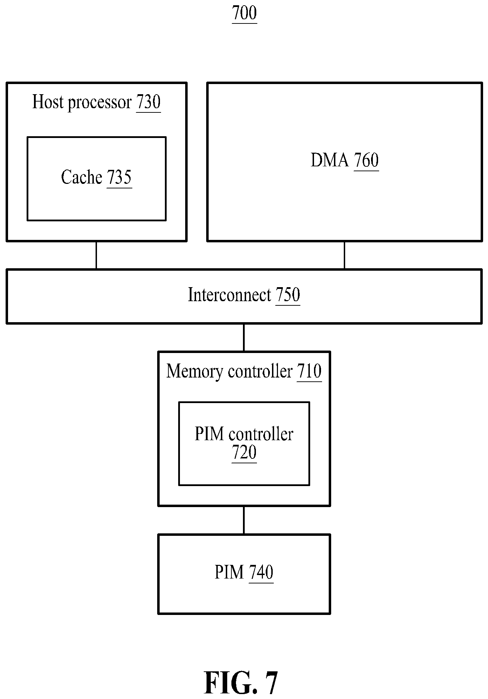

FIG. 7 is a diagram illustrating an electronic device according to an embodiment.

FIG. 7 illustrates an embodiment of a system 700 in which the PIM controller (e.g., a PIM controller 720) described above is disposed in a memory controller 710. The PIM controller 720 may be disposed in the memory controller 710 and perform the operations described above. The PIM controller 720 may be similar to the PIM controller 620. A host processor 730 of the system 700 may include a cache 735. The system 700 may further include a DMA 760 and an interconnect 750 similar to the interconnect 150. The memory controller 710 may interface with a PIM 740 similar to the PIM 640. Accordingly, a more detailed description thereof is omitted.

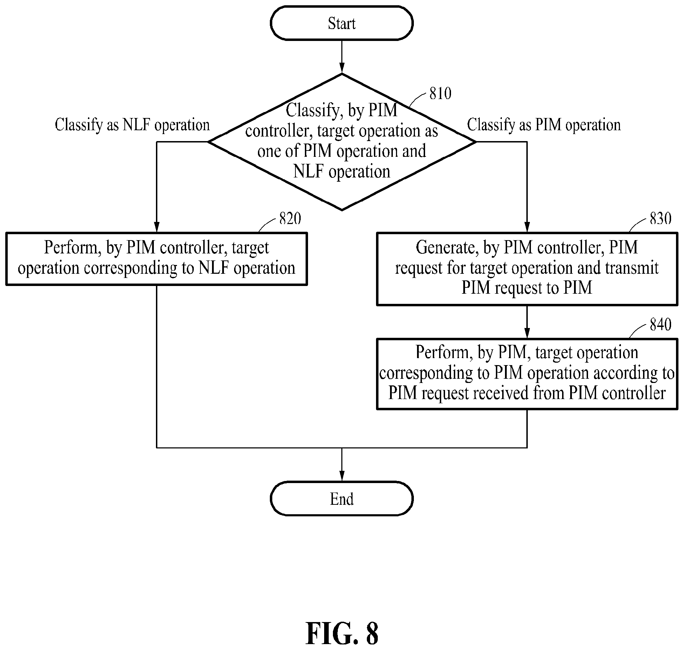

FIG. 8 is a diagram illustrating a method of operating an electronic device, according to an embodiment.

In the following embodiments, operations may be performed sequentially but not necessarily. For example, the order of the operations may be changed, and at least two of the operations may be performed in parallel. Operations 810 to 840 may be performed by at least one component (e.g., a PIM controller, a PIM, etc.) of the electronic device.

In operation 810, the PIM controller classifies a target operation to be processed among a plurality of operations based on a requested order as one of a PIM operation and an NLF operation. The PIM controller may classify the target operation as one of the PIM operation and the NLF operation based on type information of the target operation.

In operation 820, in response to classifying the target operation as the NLF operation, the PIM controller performs the target operation corresponding to the NLF operation. The target operation may be included in the PIM controller and performed by an NLF hardware block that performs an NLF operation among the plurality of operations.

In operation 830, in response to classifying the target operation as the PIM operation, the PIM controller generates a PIM request (e.g., a signal, a command, etc.) for the target operation and transmits the PIM request to the PIM in the electronic device. In response to the PIM request received from the PIM controller, a memory controller in the electronic device generates a PIM command and transmits the PIM command to the PIM.

In operation 840, the PIM performs the target operation corresponding to the PIM operation according to the PIM request received from the PIM controller.

In an embodiment, the plurality of operations are performed by the PIM controller and the PIM but not by the host processor.

In response to all of the plurality of operations being performed, the PIM controller may transmit the result of the plurality of operations to the host processor in the electronic device.

The descriptions provided with reference to FIGS. 1 to 7 may apply to the operations shown in FIG. 8, and thus further detailed descriptions thereof are omitted.

The embodiments described herein may be implemented using a hardware component, a software component and/or a combination thereof. A processing device (e.g., host processor, PIM controller, NLF hardware block, etc.) may be implemented using one or more general-purpose or special-purpose computers, such as, for example, a processor, a controller and an arithmetic logic unit (ALU), a digital-signal-processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is singular; however, one of ordinary skill in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as floptical discs; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

The above-described hardware devices may be configured to act as one or more software modules to perform the operations of the above-described embodiments, or vice versa.

As described above, although the embodiments have been described with reference to certain drawings, one of ordinary skill in the art may apply various technical modifications and variations based thereon. For example, suitable results may be achieved if the described techniques are performed in a different order, and/or if components in a described system, architecture, device, or circuit are combined in a different manner, and/or replaced or supplemented by other components or their equivalents.

The present invention is specified by the scope of the following claims.

### The following is a list of further preferred embodiments of the invention:

Embodiment 1. An electronic device comprising:
   a processing-in-memory (PIM) controller; and
   a PIM configured to perform a PIM operation in response to a PIM request generated by the PIM controller,
   wherein the PIM controller is configured to perform a non-linear function (NLF) operation among a plurality of requested operations, generate a PIM request for the PIM operation, and transmit the PIM request to the PIM.
Embodiment 2. The electronic device of embodiment 1, wherein the PIM controller comprises a first logic circuit configured to perform the NLF operation among the plurality of requested operations.
Embodiment 3. The electronic device of embodiment 2, wherein the PIM controller further comprises:
   a command queue configured to store commands for the plurality of requested operations received from a host processor in the electronic device;
   a second logic circuit configured to generate the PIM request for the PIM operation among the plurality of requested operations; and
   a control register configured to control an operation of the first logic circuit.
Embodiment 4. The electronic device of embodiment 1, wherein the PIM controller is configured to classify each of the plurality of requested operations as one of the PIM operation and the NLF operation according to type information of each of the plurality of requested operations.
Embodiment 5. The electronic device of embodiment 1, further comprising:
   a host processor configured to transmit a request for the plurality of requested operations to the PIM controller.
Embodiment 6. The electronic device of embodiment 5, wherein the plurality of requested operations is performed by the PIM controller and the PIM and not the host processor.
Embodiment 7. The electronic device of embodiment 1, further comprising:
   a memory controller configured to, in response to the PIM request received from the PIM controller, generate a PIM command and transmit the PIM command to the PIM.
Embodiment 8. The electronic device of embodiment 1, wherein
   the PIM controller is disposed in a memory controller comprised in the electronic device and configured to manage data input into the PIM or data output from the PIM, or
   a direct memory access (DMA) comprised in the electronic device and configured to access data stored in the PIM.
Embodiment 9. The electronic device of embodiment 1, wherein the PIM controller is configured to, in response to all of the plurality of requested operations being performed, transmit a result of the plurality of requested operations to a host processor.
Embodiment 10.The electronic device of embodiment 1, wherein the PIM comprises a data storage space and an operator configured to perform the PIM operation in response to the PIM request.
Embodiment 11. The electronic device of embodiment 10, wherein the data storage space is configured to store a result of the PIM operation and a result of the NLF operation.
Embodiment 12.A method of operating an electronic device, the method comprising:
   classifying, by a processing-in-memory (PIM) controller in the electronic device, a target operation to be processed as one of a PIM operation and a non-linear function (NLF) operation based on a requested order of a plurality of operations;
   performing, by the PIM controller, in response to classifying the target operation as the NLF operation, the target operation corresponding to the NLF operation;
   generating, by the PIM controller, in response to classifying the target operation as the PIM operation, a PIM request for the target operation and transmitting the PIM request to a PIM in the electronic device; and
   performing, by the PIM, the target operation corresponding to the PIM operation according to the PIM request received from the PIM controller.
Embodiment 13.The method of embodiment 12, wherein the performing of the target operation corresponding to the NLF operation is performed by a first logic circuit comprised in the PIM controller and configured to perform an NLF operation among the plurality of operations.
Embodiment 14.The method of embodiment 12, further comprising:
   storing commands for the plurality of operations received from a host processor in the electronic device to a command queue comprised in the PIM controller.
Embodiment 15.The method of embodiment 12, wherein the classifying of the target operation comprises classifying the target operation as one of the PIM operation and the NLF operation according to type information of the target operation.
Embodiment 16.The method of embodiment 12, further comprising:
   transmitting, by a host processor in the electronic device, a request for the plurality of operations to the PIM controller.
Embodiment 17.A non-transitory computer-readable storage medium storing instructions that, when executed by a processor, cause the processor to perform the method of embodiment 12.
Embodiment 18.An electronic device comprising:
   a processing-in-memory (PIM) to perform a PIM operation in response to a PIM request; and
   a direct memory access (DMA) comprising a PIM controller,
   wherein the PIM controller is configured to perform a non-linear function (NLF) operation among a plurality of operations requested by a host processor, generate a PIM request for a PIM operation among the plurality of operations, and transmit the PIM request to the PIM.
Embodiment 19.The electronic device of embodiment 18, further comprising a memory controller, wherein the PIM controller transmits the PIM request to the memory controller, and the memory controller forwards the PIM request to the PIM.
Embodiment 20.The electronic device of embodiment 19, further comprising:
   an interconnect connected to the host processor, the DMA, and the memory controller,
   wherein the DMA receives commands for the plurality of operation from the host processor through the interconnect, and
   wherein the memory controller receives the PIM request through the interconnect.

## Claims

1. An electronic device comprising:
a processing-in-memory, PIM, controller; and
a PIM configured to perform a PIM operation in response to a PIM request generated by the PIM controller,
wherein the PIM controller is configured to perform a non-linear function, NLF, operation among a plurality of requested operations, generate a PIM request for the PIM operation, and transmit the PIM request to the PIM.

2. The electronic device of claim 1, wherein the PIM controller comprises a first logic circuit configured to perform the NLF operation among the plurality of requested operations,
wherein the PIM controller further comprises a command queue configured to store commands for the plurality of requested operations received from a host processor in the electronic device, a second logic circuit configured to generate the PIM request for the PIM operation among the plurality of requested operations, and a control register configured to control an operation of the first logic circuit.

3. The electronic device of claim 1, wherein the PIM controller is configured to classify each of the plurality of requested operations as one of the PIM operation and the NLF operation according to type information of each of the plurality of requested operations.

4. The electronic device of claim 1, further comprising:
a host processor configured to transmit a request for the plurality of requested operations to the PIM controller, and
wherein the plurality of requested operations is performed by the PIM controller and the PIM and not the host processor.

5. The electronic device of claim 1, further comprising:
a memory controller configured to, in response to the PIM request received from the PIM controller, generate a PIM command and transmit the PIM command to the PIM.

6. The electronic device of claim 1,
wherein the PIM controller is disposed in a memory controller comprised in the electronic device and configured to manage data input into the PIM or data output from the PIM, or
further comprising a direct memory access, DMA, comprised in the electronic device and configured to access data stored in the PIM, or
further comprising a direct memory access, DMA, including the PIM controller, the plurality of operations being requested by a host processor, and the PIM request being generated for the PIM operation among the plurality of operations.

7. The electronic device of claim 6, further comprising one or more of:
a memory controller, wherein the PIM controller is configured to transmit the PIM request to the memory controller, and the memory controller is configured to forward the PIM request to the PIM, and
an interconnect connected to the host processor, the DMA, and the memory controller, wherein the DMA is configured to receive commands for the plurality of operation from the host processor through the interconnect, and the memory controller is configured to receive the PIM request through the interconnect.

8. The electronic device of claim 1, wherein the PIM controller is configured to, in response to all of the plurality of requested operations being performed, transmit a result of the plurality of requested operations to a host processor.

9. The electronic device of one of claims 1 to 8, wherein the PIM comprises a data storage space and an operator configured to perform the PIM operation in response to the PIM request,
wherein the data storage space is configured to store a result of the PIM operation and a result of the NLF operation.

10. A method of operating an electronic device, the method comprising:
classifying, by a processing-in-memory, PIM, controller in the electronic device, a target operation to be processed as one of a PIM operation and a non-linear function, NLF, operation based on a requested order of a plurality of operations;
performing, by the PIM controller, in response to classifying the target operation as the NLF operation, the target operation corresponding to the NLF operation;
generating, by the PIM controller, in response to classifying the target operation as the PIM operation, a PIM request for the target operation and transmitting the PIM request to a PIM in the electronic device; and
performing, by the PIM, the target operation corresponding to the PIM operation according to the PIM request received from the PIM controller.

11. The method of claim 10, wherein the performing of the target operation corresponding to the NLF operation is performed by a first logic circuit comprised in the PIM controller and configured to perform an NLF operation among the plurality of operations.

12. The method of claim 10 or 11, further comprising:
storing commands for the plurality of operations received from a host processor in the electronic device to a command queue comprised in the PIM controller.

13. The method of one of claims 10 to 12, wherein the classifying of the target operation comprises classifying the target operation as one of the PIM operation and the NLF operation according to type information of the target operation.

14. The method of one of claims 10 to 13, further comprising:
transmitting, by a host processor in the electronic device, a request for the plurality of operations to the PIM controller.

15. A non-transitory computer-readable storage medium storing instructions that, when executed by a processor, cause the processor to perform the method of one of claims 10 to 14.
